# FASCICULE DE BREVET EUROPEEN

(11) **EP 1 077 158 B1**
(45) Date de publication et mention de la délivrance du brevet: **10.01.2007**
(21) Numéro de dépôt: 00402070.7
(22) Date de dépôt: 20.07.2000
(51) Int. Cl.: B60Q 1/00, B60Q 1/12, F21V 14/06

(54) **Dispositif d'éclairage et/ou de signalisation pour véhicule, et véhicule pourvu d'un tel dispositif.**
Fahrzeugbeleuchtungs- und/oder Signaleinrichtung und Fahrzeug mit einer solchen Einrichtung
Vehicle signalling and/or lighting device and vehicle comprising such a device

(30) Priorité: 19.08.1999 FR 9910639
(43) Date de publication de la demande: 21.02.2001
(73) Titulaire: Peugeot Citroen Automobiles SA, 92200 Neuilly sur Seine (FR)
(72) Inventeur: Bosson-Azzopardi, Pascal, 92250 La Garenne Colombes (FR)
(74) Mandataire: De Cuenca, Emmanuel Jaime

(56) Documents cités:
- DE-A- 4 129 094
- DE-A- 4 341 234
- US-A- 1 570 589
- US-A- 5 550 716

## Description

L'invention se rapporte à dispositif d'éclairage et/ou de signalisation pour véhicule, ainsi qu'à un véhicule pourvu d'un tel dispositif.

Les dispositifs connus d'éclairage de véhicules comportent en général une lampe ainsi que des moyens de réflexion de la lumière émise par la lampe vers l'extérieur du véhicule. Les moyens de réflexion de la lumière peuvent notamment comporter un cache de lumière directe disposé devant la lampe, ainsi qu'un ou plusieurs miroirs disposés derrière la lampe.

Cependant, ce type de dispositif d'éclairage a un encombrement relativement important, notamment selon une direction parallèle à l'axe longitudinal du véhicule. Par ailleurs, il est nécessaire de ménager un espace libre dans le véhicule, à l'arrière des ces dispositifs d'éclairage, pour permettre le passage des mains d'un opérateur souhaitant changer une lampe.

Un autre inconvénient des dispositifs de l'art antérieur est que ces derniers ont une structure qui rend difficile l'implantation d'un mécanisme permettant de modifier l'angle et/ou la forme du faisceau lumineux lors du fonctionnement du véhicule.

Le document DE 43 41 234-A décrit un dispositif d'éclairage pour véhicule selon le préambule de la revendication 1, comportant quatre lentilles optiques associées respectivement aux extrémités de quatre guides de lumière véhiculant de la lumière provenant d'une source. Les lentilles ou les extrémités de sortie de lumière des guides sont susceptibles d'être déplacées dans la direction horizontale pour modifier la forme du faisceau de lumière constitué par la combinaison des faisceaux venant des différentes lentilles.

Ce dispositif permet certes de modifier le faisceau, cependant il comporte de nombreux inconvénients. Ainsi, il présente un encombrement important dans la direction transversale à l'axe longitudinal du véhicule. De plus, lorsque l'on souhaite donner une forme complexe au faisceau, par exemple en éclairant simultanément dans plusieurs directions, la structure des moyens de réglage de la position des lentilles ou des guides de lumière devient très complexe.

Un but de la présente invention est de proposer un dispositif d'éclairage et/ou de signalisation pour véhicule, palliant tout ou partie des inconvénients de l'art antérieur relevés ci-dessus.

Ce but est atteint par le fait que le dispositif d'éclairage et/ou de signalisation pour véhicule, comportent des moyens d'émission de lumière et des moyens de focalisation comprenant une pluralité d'éléments optiques prismatiques, le ou les faisceaux lumineux du dispositif d'éclairage étant constitué par l'addition des faisceaux respectifs de chacun des éléments optiques, au moins une partie des éléments optiques étant disposés sur des supports mobiles respectifs, les supports étant déplaçables par des moyens d'actionnement via des moyens de transmission du mouvement, de façon à modifier la taille et/ou la forme et/ou la l'orientation du ou des faisceaux de lumière, caractérisé en ce qu'au moins une partie des supports sont mobiles en rotation autour d'axes respectifs sensiblement verticaux lorsque le dispositif est en position montée sur le véhicule.

Par ailleurs, l'invention peut comporter l'une ou plusieurs des caractéristiques suivantes :
- les moyens d'émission de lumière comportent une pluralité de sources lumineuses associées respectivement chacune à élément optique respectif,
- au moins une source lumineuse du type diode électroluminescente est disposée au niveau de la base de chacun d'au moins une partie des éléments optiques,
- chaque source lumineuse est disposée dans un évidemment formé dans la base de l'élément optique,
- au moins une partie des supports des éléments optiques sont mobiles indépendamment les uns des autres,
- les moyens d'actionnement sont constitués d'un servomoteur commandant un actionneur linéaire ou rotatif, les moyens de transmission du mouvement comportant une pluralité de biellettes dont au moins une relie l'actionneur à un support mobile,
- le dispositif comporte au moins deux rangées constituées chacune d'une pluralité d'éléments optiques mobiles, les deux supports de chaque paire d'éléments optiques mobiles adjacents d'une même rangée étant reliés par une biellette de transmission respective, un support de chacune des rangées étant relié par une biellette de commande à un support d'une rangée adjacente,
- les points de liaison des biellettes sont disposés à des distances déterminées par rapport aux axes de rotations respectifs des supports, pour assurer une amplitude de rotation déterminée de chacun des éléments optiques autour d'une position de référence,
- les biellettes ont une longueur réglable pour assurer le réglage des positions angulaires relatives des éléments optiques.

Un autre but est de proposer un véhicule pourvu d'un dispositif d'éclairage et/ou de signalisation conforme à l'invention.

Ce but est atteint par le fait que le véhicule comporte au moins un dispositif d'éclairage et/ou de signalisation ainsi que des moyens électroniques de commande des moyens d'actionnement, pour modifier l'orientation, et/ou la forme du ou des faisceaux lumineux en fonction de paramètres de fonctionnement du véhicule tels que la vitesse, l'amplitude et la fréquence du braquage des roues, la fréquence des changements de rapports de vitesses.

D'autres particularités et avantages apparaîtront à la lecture de la description ci-après faite en référence aux figures dans lesquelles :
- la figure 1 représente une vue de face d'un dispositif d'éclairage selon l'invention,
- la figure 2 représente une vue schématique en perspective d'un exemple d'agencement des éléments optiques du dispositif d'éclairage de la figure 1, dans lequel les éléments optiques sont mobiles,
- la figure 3 représente une vue en perspective d'un détail de l'agencement de la figure 2,
- la figure 4 représente une vue de derrière et simplifiée du dispositif d'éclairage de la figure 1,
- la figure 5 représente une vue en perspective simplifiée et de dessous, du mécanisme de déplacement des éléments optiques du dispositif de la figure 2,
- la figure 6 représente une vue en coupe de l'agencement des supports de trois éléments optiques mobiles de la figure 2,
- les figure 7 et 8 représentent respectivement des vues en coupe de deux pièces du mécanisme de support et d'entraînement d'un élément optique de la figure 6,
- la figure 9 représente une vue en en perspective d'un détail du mécanisme de la figure 2, illustrant un élément optique disposé sur son support mobile,
- la figure 10 représente une vue de côté et schématique d'une variante de réalisation d'un agencement d'un élément optique avec des moyens d'émission de lumière associés.

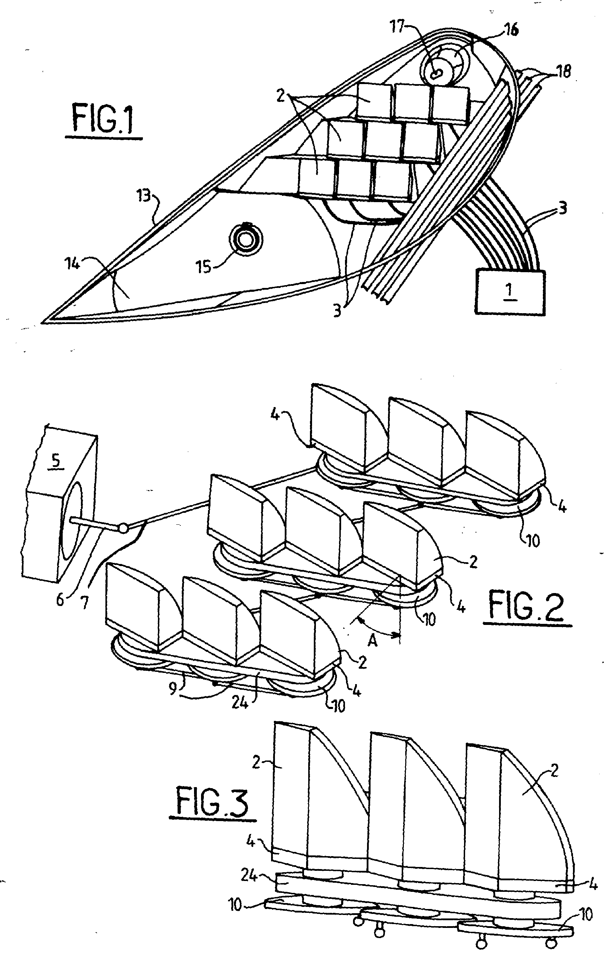

La figure 1 représente une vue de face d'un bloc optique de véhicule pourvu d'un dispositif d'éclairage selon l'invention. Le bloc optique comporte un boîtier 13 de forme générale elliptique dont la face avant est refermée par une paroi transparente, constituée par exemple de verre. Dans sa partie inférieure le bloc optique comporte une fonction code constitué classiquement d'une lampe 15 disposée dans une parabole 14 réfléchissante. Dans sa partie supérieure, le bloc optique 13 comporte une fonction veilleuse constituée d'un boîtier opaque 16 dans lequel est disposée une source lumineuse (non représentée). La face avant du boîtier opaque 16 comporte un orifice duquel fait saillie un téton 17 conducteur de la lumière émise par la source située dans le boîtier 16. Le bloc optique 13 comporte également une fonction feux de signalisation ou clignotant constitué, par exemple, de trois fibres 18 conductrices de la lumière et comportant des moyens de réflexion de cette lumière vers l'extérieur. Les trois fibres 18 sont illuminées à leurs extrémités par des sources lumineuses (non représentées) telles que des diodes électroluminescentes.

La fonction phare du bloc optique 13 comporte des moyens d'émission 1 de lumière et des moyens de focalisation 2 de cette lumière en au moins un faisceau. Les moyens de focalisation de la lumière des phares sont situés entre la fonction code 14, 15 et la fonction veilleuse 16,17. Selon l'invention, les moyens de focalisation sont constitués d'une pluralité d'éléments optiques 2 ayant chacun la forme générale d'un prisme. Par soucis de concision, les éléments optiques prismatiques 2 sont appelés ci-après prismes. Les prismes 2 sont constitués chacun d'un matériau conducteur de la lumière, de préférence transparent, par exemple du verre, du plastique ou tout autre matériau approprié. Les prismes 2 focalisent la lumière des moyens d'émission 1, 11 directement vers l'extérieur du bloc optique 13.

Dans l'exemple de réalisation représenté à la figure 1, le dispositif d'éclairage du véhicule comporte neuf prismes 2, disposés selon trois rangées de trois prismes. Les trois rangées de prismes 2 sont situées respectivement dans trois plans sensiblement perpendiculaires à la direction longitudinale du véhicule. Les trois rangées de prismes 2 peuvent être disposées à des hauteurs respectives différentes dans le bloc optique 13, de façon que la face avant de chaque prisme 2 ne soit pas masquée. Ainsi, les neufs prismes 2 forment un ensemble géométrique cohérent lorsque le dispositif d'éclairage est vu de l'avant.

La lumière du phare est produite par des moyens d'émission constitué d'une ou plusieurs sources lumineuses 1 situées, par exemple, en dehors du bloc optique. Comme représenté à la figure 1, les prismes 2 peuvent être éclairés par une source lumineuse unique 1, chacun des prismes 2 étant alimentés en lumière par l'intermédiaire d'une fibre optique 3 respective. En particulier, les fibres optiques 3 peuvent véhiculer la lumière au niveau de la base de chaque prisme 2. La source 1 peut être constituée d'une lampe coopérant avec un réflecteur ou de tout autre moyen équivalent. Avantageusement, la source lumineuse 1 peut être disposée dans un espace éloigné du bloc optique, pour limiter le volume de ce dernier. En effet, en disposant la source lumineuse, par exemple, dans la zone du véhicule située devant les roues, sous le bloc optique, on minimise la longueur du bloc optique dans une direction parallèle à l'axe longitudinal du véhicule. Ainsi, la source lumineuse 1 peut être disposée dans une zone du véhicule où l'espace est disponible et facilement accessible pour un opérateur.

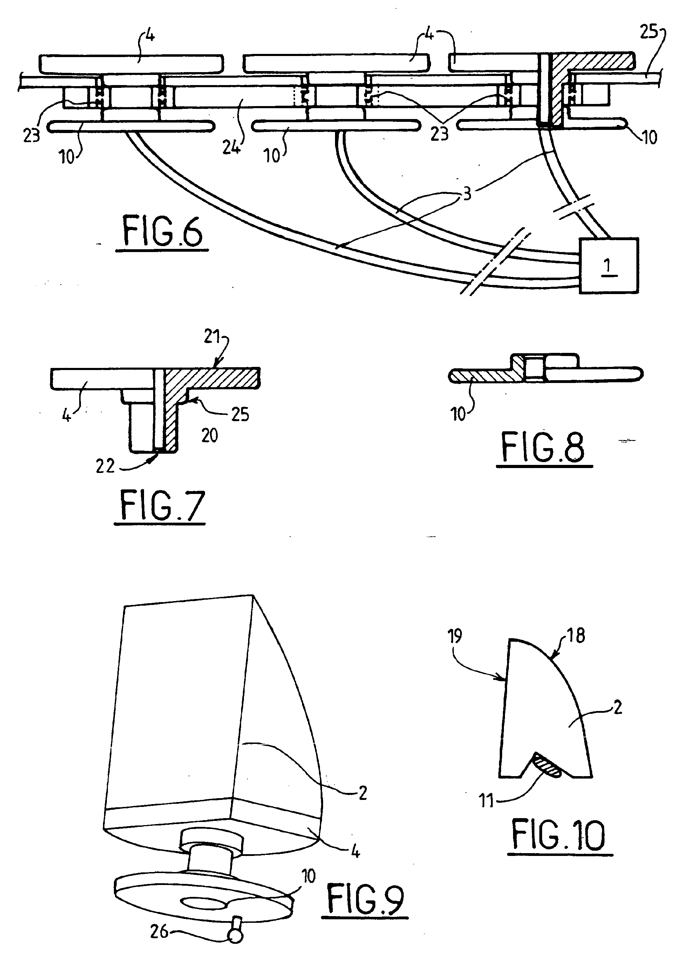

Bien entendu, l'invention n'est pas limitée à l'exemple de réalisation des moyens d'émission de lumière décrits ci-dessus. En effet, comme représenté à la figure 10, une source lumineuse 11 distincte peut être disposée à la base de chacun des prismes 2. Chaque source lumineuse 11 peut être constituée d'une diode électroluminescente ou de tout autre moyen équivalent. De préférence, chaque source lumineuse 11 est disposée dans un évidemment formé dans la base du prisme 2 concerné.

La face arrière 18 de chaque prisme 2 peut décrire une convexité de forme déterminée pour que le prisme 2 focalise la lumière provenant de la source 1, 11 vers l'extérieur, au travers de sa face avant 19. En particulier, la géométrie du prisme 2 peut être déterminée de façon que ce dernier assure la fonction d'une lentille optique, c'est-à-dire que qu'il n'est pas nécessaire de disposer une lentille optique sur le trajet de la lumière entre d'une part le prisme 2 et, d'autre part la source 11 ou la fibre optique 3.

Avantageusement, les moyens d'émission 1 et de distribution 3 de la lumière sont de préférence aptes à délivrer aux différents éléments optiques 2 des quantités de lumière respectives déterminées et variables. De cette façon, il est possible de commander sélectivement l'intensité lumineuse de la lumière réfléchie et focalisée par chacun des éléments optiques 2.

Par exemple, on peut envisager de pourvoir chaque fibre optique 3 d'un système du type diaphragme, permettant de faire varier la quantité de lumière transmise par la fibre 3. De même, dans le cas où chacun des éléments optiques est alimenté par une source propre, on peut envisager de faire varier la tension électrique appliquée à chacune des sources.

Selon une caractéristique préférée de l'invention, au moins une partie des prismes 2 peuvent être disposés sur des supports mobiles 4, de façon à permettre de modifier leur orientation. Dans l'exemple de réalisation préféré décrit ci-après, chacun des neuf prismes 2 est disposé sur un support mobile 4 respectif (figure 2). Plus précisément, chacun des supports 4 est mobile en rotation autour d'un axe respectif. Les axes de rotation de chacun des supports 4 sont de préférence sensiblement perpendiculaires au sol lorsque le bloc optique 13 est monté sur un véhicule.

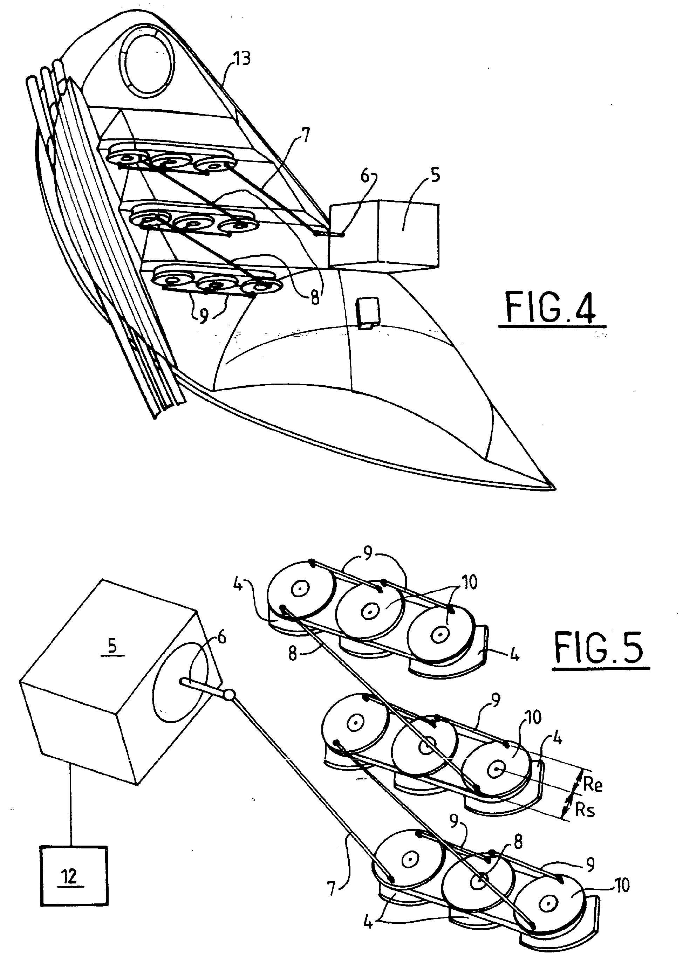

Les figures 3 et 6 à 8 illustrent plus en détail le montage des trois supports 4 mobiles d'une rangée de prismes 2. Chaque support 4 est constitué d'une pièce comportant une portion cylindrique 20 et dont l'une des extrémités comporte un épaulement radial ayant la forme générale d'un disque 21 (figure 7). Le disque 21 formé par le support 4 constitue la surface sur laquelle est disposée et fixée la base du prisme 2. Le support 4 est par ailleurs alésé selon son axe de symétrie longitudinal, pour permettre le passage d'une fibre optique 3 destinée à acheminer de la lumière au niveau de la base du prisme 2 (figure 6). La portion cylindrique 20 du support 4 est emmanchée dans un roulement 23 solidaire d'une embase 24. L'embase 24 peut être constituée d'une plaque et peut comporter deux autres roulements 23 prévus pour les autres supports 4 d'une même rangée de prismes 2. L'embase 24 peut être fixée contre une paroi 25 du boîtier du bloc optique 23. A cet effet, la paroi 25 supportant l'embase 24 comporte des orifices prévus pour le passage de la portion cylindrique des supports 4. L'extrémité libre de la portion cylindrique 20 de chaque support 4 peut être filetée. Ainsi, chacun des supports 4 peut être maintenu axialement dans son roulement 23 au moyen d'un écrou 10 respectif (figure 8). En particulier, le support 4 est bloqué axialement dans son roulement 23 entre, d'une part un épaulement 25 formé à proximité du disque 24, et d'autre part l'écrou 10.

Chacun des supports 4 est déplaçable par des moyens d'actionnement 5, 6, via des moyens de transmission 7, 8, 9, 10 du mouvement (figure 5). Comme représenté aux figures 2 et 3, les moyens d'actionnement peuvent être constitués d'un servomoteur 5 qui commandant un actionneur 6, par exemple linéaire. Les moyens de transmission de l'actionneur à chacun des supports 4 peuvent être constitués quant à eux d'une pluralité de biellettes 7, 8, 9.

Les écrous 10, qui sont solidaire en rotation de leur support 4 respectif, peuvent avoir la forme générale d'un disque. Les biellettes 7, 8, 9 sont constituées chacune d'un axe de longueur déterminé et peuvent être reliées aux supports 4 par l'intermédiaire des écrous 10. Par exemple, chacune des extrémités des biellettes 8, 9 peut comporter une chape apte à se fixer sur une tête de rotule 26 située sur la face inférieure de l'écrou 10 correspondant. Par exemple, les chapes peuvent venir se fixer par clippage sur les têtes de rotule 26. Ainsi, par soucis de simplification, lorsque ci-après on parlera d'une liaison d'une biellette à un support 4, cela signifiera implicitement que la biellette est reliée à l'écrou 10 solidaire dudit support 4.

Dans une configuration préférée, les deux supports 4 de toutes les paires de prismes 2 adjacents d'une même rangée sont reliés par une biellette de transmission 9 respective (figures 2, 4, 5). C'est-à-dire que le support 4 qui se trouve à l'une des extrémités d'une rangée de prisme 2 est relié par une biellette de transmission 9 au support 4 situé au milieu de la rangée. Le support 4 situé au milieu de la rangée est reliée quant à lui par une autre biellette de transmission 9 au support 4 situé à l'autre extrémité de cette même rangée.

Par ailleurs, en se référant à la figure 5, le support 4 situé à l'extrémité gauche de la rangée supérieure est relié, par une biellette de commande 8, au support 4 situé à l'extrémité droite de la rangée centrale. Le support 4 situé à l'extrémité gauche de la rangée centrale est relié quant à lui, par une autre biellette de commande 8, au support 4 situé à l'extrémité droite de la rangée inférieure. Enfin, le support 4 situé à l'extrémité gauche de la rangée inférieure est relié par une biellette de commande 7 à l'actionneur 6 du servomoteur 5.

Les extrémités des biellettes 8, 9 sont disposées à des distances déterminées par rapport aux axes de rotations respectifs des supports 4. De cette façon, les mouvements de rotation de chacun des supports 4 sont couplés. Ainsi, les déplacements des prismes 2 sont simultanés et ont des amplitudes respectives déterminées.

En se référant au support 4 situé à l'extrémité droite de la rangée centrale de la figure 5, on appelle Re la distance entre le point de fixation de la biellette de transmission 9 et l'axe de rotation du support 4. On appelle Rs la distance entre le point de fixation de la biellette de transmission 8 et l'axe de rotation du support 4. La biellette de transmission 9 impose l'angle de rotation A au support (figure 2). La biellette de transmission 8 permet quant à elle de transmettre le mouvement de rotation au support 4 suivant. Le rapport Rs/Re est un rapport de démultiplication qui détermine les angles de rotation de deux prismes 2 successifs. En numérotant les supports 4 par ordre croissant de bas en haut et de gauche à droite sur la figure 5 (c'est-à-dire de gauche à droite et de haut en bas à la figure 2), les angles de rotation de deux supports successifs A(n), A(n+1), sont donnés par la formule : A(n+1)/A(n) = Rs(n)/Re(n); avec n = numéro d'ordre du support. Par ailleurs l'angle de rotation du premier support A(1) (support de l'extrémité gauche de la rangée inférieure de la figure 5, ou support de l'extrémité gauche de la rangée supérieure de la figure 2) est donné par A(1) = Cm/Re(1), avec Cm = la course du servomoteur 5,6.

Avantageusement, les biellettes 8, 9 peuvent avoir chacune une longueur réglable, par exemple manuellement, pour permettre le réglage des positions angulaires relatives des prismes 2. Par exemple, les deux chapes d'une biellette 8, 9 peuvent être vissées avec des pas de vis opposés sur les extrémités de la biellette. De cette façon, lorsque le montage des biellettes 8, 9 sur les têtes de rotule 26 est effectué, il est facile de régler précisément les positions angulaires relatives des supports 4.

On conçoit donc que le mécanisme de prismes pivotants décrit ci-dessus, tout en présentant une structure simple et peu coûteuse, permet de disposer les phares dans une multitude de configurations. En effet, en jouant sur les valeurs Re(n) et Rs(n), il est possible d'obtenir une palette infinie de réglage du comportement du ou des faisceaux de lumière du phare. Les faisceaux peut d'ailleurs être piloté par un paramètre unique, à savoir la course Cm du servomoteur 5, 6.

Avantageusement, le dispositif d'éclairage selon l'invention peut comporter des moyens électroniques 12 tel qu'un calculateur, qui commande le servomoteur 5, 6. Le calculateur peut ainsi commander l'orientation, et/ou la forme du ou des faisceaux lumineux en fonction, par exemple, de paramètres de fonctionnement du véhicule et/ou de la topographie du terrain sur lequel roule le véhicule (figure 5).

Les paramètres du véhicule qui peuvent influer sur l'orientation des prismes 2 peuvent comprendre, par exemple, la vitesse du véhicule, l'amplitude et la fréquence du braquage des roues, la fréquence des changements de rapports de vitesses. En effet, grâce à une série de capteurs et une logique programmée, le calculateur 12 peut déduire que, dans le cas où des changements de rapport de vitesse et des braquages de roues sont fréquents, le véhicule roule sur une route sinueuse. Dans ce cas, le calculateur 12 peut commander le servomoteur de façon que ce dernier dispose les prismes 2 dans une configuration dans laquelle les faisceaux des phares sont étalés largement de part et d'autre de la direction longitudinale du véhicule.

De même, lorsque la direction du véhicule et le changement de rapport de vitesse ne varie pas, et que le véhicule roule à une vitesse relativement importante, le calculateur 12 peut commander le servomoteur 5 pour qu'il dispose les prismes 2 dans une position dans laquelle le faisceau lumineux des phares est concentré dans la direction longitudinale du véhicule.

Par ailleurs, le dispositif selon l'invention présente une grande compacité et une faible masse qui permet de limiter l'encombrement du phare. Le dispositif selon l'invention présente également une grande fiabilité et solidité qui lui confère une durée de vie supérieure aux dispositifs de l'art antérieur.

En outre, selon une caractéristique avantageuse de l'invention, les supports 4 des prismes 2 peuvent être dimensionnés et constitués d'un matériau apte à évacuer une grande partie de la chaleur générée par les moyens d'émission de lumière. En particulier, lorsqu'une diode 11 est disposée à base d'un prisme 2, le support est conformé pour dissiper une grande quantité de la chaleur produite par la diode 11.

Bien entendu, l'invention ne saurait se limiter à l'exemple de réalisation préféré décrit ci-dessus. Par exemple, les moyens d'actionnement 5, 6 et les moyens de transmission 7, 8, 9, 10 peuvent être agencés de façon que les supports 4 de chacun des éléments optiques 2 soient mobiles indépendamment les uns des autres.

De plus, des éléments optiques ayant des formes autres que prismatique et assurant également la focalisation de la lumière des moyens d'émission 1, 11 peuvent être utilisés. De même, le nombre et la disposition des éléments optiques 2 peuvent être différents. Par ailleurs, le dispositif d'éclairage peut s'appliquer à d'autres fonctions du bloc optique. Ainsi, la fonction clignotant du bloc optique peut également être réalisée par un ou plusieurs éléments optiques fixes ou mobiles.

Il est également possible d'envisager de monter les prismes 2 sur des supports mobiles en rotation selon deux axes de rotation distincts. Par exemple, les prismes 2 peuvent ainsi être pivotés d'une part selon un axe sensiblement vertical et, d'autre part, selon un axe sensiblement horizontal par rapport au véhicule.

En variante également, tout ou partie des éléments optiques prismatiques 2 peuvent être recouverts, au moins en partie, d'une couche de matériau réfléchissant, pour contribuer à réfléchir et focaliser la lumière issue des moyens d'émission 1. Par exemple, la face arrière 18 d'au moins une partie des prismes 2 peut être recouverte d'aluminium.

En variante également, tout ou partie des éléments prismatiques 2 peuvent être remplacés par des parois ou miroirs de forme déterminée, pour assurer la focalisation de la lumière en au moins un faisceau. Par exemple, les miroirs peuvent avoir chacun une forme correspondant à la face arrière bombée des prismes 2 décrits ci-dessus.

## Revendications

1. Dispositif d'éclairage et/ou de signalisation pour véhicule, comportant des moyens d'émission (1, 11) de lumière et des moyens de focalisation (2) comprenant une pluralité d'éléments optiques prismatiques (2), le ou les faisceaux lumineux du dispositif d'éclairage étant constitué par l'addition des faisceaux respectifs de chacun des éléments optiques (2), au moins une partie des éléments optiques (2) étant disposés sur des supports mobiles (4) respectifs, les supports (4) étant déplaçables par des moyens d'actionnement (5, 6) via des moyens de transmission (7, 8, 9, 10) du mouvement, de façon à modifier la taille et/ou la forme et/ou la l'orientation du ou des faisceaux de lumière, **caractérisé en ce qu'**au moins une partie des supports (4) sont mobiles en rotation autour d'axes respectifs sensiblement verticaux lorsque le dispositif est en position montée sur le véhicule.

2. Dispositif d'éclairage et/ou de signalisation selon la revendication 1, **caractérisé en ce que** les moyens d'émission de lumière comportent une pluralité de sources lumineuses (11) associées respectivement chacune à élément optique (2) respectif.

3. Dispositif d'éclairage et/ou de signalisation selon la revendication 1 ou 2, **caractérisé en ce qu'**au moins une source lumineuse (11) du type diode électroluminescente est disposée au niveau de la base de chacun d'au moins une partie des éléments optiques (2).

4. Dispositif d'éclairage et/ou de signalisation selon la revendication 3, **caractérisé en ce que** chaque source lumineuse (11) est disposée dans un évidemment formé dans la base de l'élément optique (2).

5. Dispositif d'éclairage et/ou de signalisation selon l'une quelconque des revendications 1 à 4, **caractérisé en ce qu'**au moins une partie des supports (4) des éléments optiques (2) sont mobiles indépendamment les uns des autres.

6. Dispositif d'éclairage et/ou de signalisation selon l'une quelconque des revendications 1 à 5, **caractérisé en ce que** les moyens d'actionnement (5, 6) sont constitués d'un servomoteur (5) commandant un actionneur (6) linéaire ou rotatif, les moyens de transmission du mouvement comportant une pluralité de biellettes (7, 8, 9) dont au moins une (7) relie l'actionneur (6) à un support (4) mobile.

7. Dispositif d'éclairage et/ou de signalisation selon la revendication 6, **caractérisé en ce qu'**il comporte au moins deux rangées constituées chacune d'une pluralité d'éléments optiques (2) mobiles, les deux supports (4) de chaque paire d'éléments optiques (2) mobiles adjacents d'une même rangée étant reliés par une biellette (9) de transmission respective, un support (4) de chacune des rangées étant relié par une biellette (8) de commande à un support (4) d'une rangée adjacente.

8. Dispositif d'éclairage et/ou de signalisation selon la revendication 7, **caractérisé en ce que** les points de liaison des biellettes (8, 9) sont disposés à des distances déterminées par rapport aux axes de rotations respectifs des supports (4), pour assurer une amplitude de rotation déterminée de chacun des éléments optiques (2) autour d'une position de référence.

9. Dispositif d'éclairage et/ou de signalisation selon l'une quelconque des revendications 1 à 8, **caractérisé en ce que** les biellettes (8, 9) ont une longueur réglable pour assurer le réglage des positions angulaires relatives des éléments optiques (2).

10. Véhicule **caractérisé en ce qu'**il est pourvu d'au moins un dispositif d'éclairage et/ou de signalisation conforme à l'une quelconque des revendications précédentes, et **en ce qu'**il comporte des moyens électroniques de commande (12) des moyens d'actionnement (5, 6), pour modifier l'orientation, et/ou la forme du ou des faisceaux lumineux en fonction de paramètres de fonctionnement du véhicule tels que la vitesse, l'amplitude et la fréquence du braquage des roues, la fréquence des changements de rapports de vitesses.

## Claims

1. Vehicle lighting and/or signalling device comprising light-emitting means (1, 11) and focusing means (2) comprising a plurality of prismatic optical elements (2), the light beam or beams of the lighting device being formed by the addition of the respective beams of each of the optical elements (2), and at least some of the optical elements (2) being arranged on respective movable supports (4), the supports (4) being displaceable by actuating means (5, 6) via movement transmission means (7, 8, 9, 10) so as to modify the shape and/or the size and/or the orientation of the light beam or beams, **characterised in that** at least some of the supports (4) are movable in rotation about respective substantially vertical axes when the device is mounted on the vehicle.

2. Lighting and/or signalling device according to claim 1, **characterised in that** the light-emitting means comprise a plurality of light sources (11), each respectively associated with the respective optical element (2).

3. Lighting and/or signalling device according to either claim 1 or claim 2, **characterised in that** at least one light-emitting diode-type light source (11) is arranged in the region of the base of each of at least some of the optical elements (2).

4. Lighting and/or signalling device according to claim 3, **characterised in that** each light source (11) is arranged in a recess formed in the base of the optical element (2).

5. Lighting and/or signalling device according to any one of claims 1 to 4, **characterised in that** at least some of the supports (4) of the optical elements (2) are movable independently of one another.

6. Lighting and/or signalling device according to any one of claims 1 to 5, **characterised in that** the actuating means (5, 6) consist of a servomotor (5) controlling a linear or rotary actuator (6), the movement transmission means comprising a plurality of link rods (7, 8, 9), at least one (7) of which connects the actuator (6) to a movable support (4).

7. Lighting and/or signalling device according to claim 6, **characterised in that** it comprises at least two rows, each consisting of a plurality of movable optical elements (2), the two supports (4) of each pair of adjacent movable optical elements (2) of a single row being connected by a respective transmission link rod (9), a support (4) of each of the rows being connected by a control link rod (8) to a support (4) of an adjacent row.

8. Lighting and/or signalling device according to claim 7, **characterised in that** the connection points of the link rods (8, 9) are arranged at given distances relative to the respective axes of rotation of the supports (4) in order to provide a given range of rotation of each of the optical elements (2) about a reference position.

9. Lighting and/or signalling device according to any one of claims 1 to 8, **characterised in that** the link rods (8, 9) have an adjustable length in order to adjust the relative angular positions of the optical elements (2).

10. Vehicle, **characterised in that** it is provided with at least one lighting and/or signalling device according to any one of the preceding claims, and **in that** it comprises electronic means (12) for controlling the actuating means (5, 6), for modifying the orientation and/or the shape of the light beam or beams as a function of the operating parameters of the vehicle such as speed, the range and the frequency of the wheel steering, the frequency of the gear ratio changes.

## Patentansprüche

1. **Vorrichtung zur Beleuchtung und/oder Signalgebung für ein Fahrzeug mit Mitteln (1, 11) zum Aussenden von Licht und** Mitteln (2) zum Fokussieren mit mehreren prismatischen optischen Elementen (2), wobei sich das oder die Lichtbündel der Beleuchtungsvorrichtung durch Addition der Bündel jedes der optischen Elemente (2) zusammensetzen, wobei zumindest ein **Teil der optischen Elemente (2) an mobilen Trägern (4) angeordnet ist, die von Betätigungsmitteln (5, 6) mittels Bewegungsübertragungs-Mitteln (7, 8, 9, 10) bewegt werden können, sodass die Größe und/oder die Form und/oder die** Ausrichtung des oder der Lichtbündel verändert werden, **dadurch gekennzeichnet, dass** mindestens ein Teil der Träger (4) um im Wesentlichen vertikale Achsen drehbeweglich ist, wenn die **Vorrichtung am Fahrzeug montiert ist.**

2. **Vorrichtung zur Beleuchtung und/oder Signalgebung nach** Anspruch 1, **dadurch gekennzeichnet, dass** die Lichtaussendemittel mehrere Lichtquellen (11) umfassen, die jeweils dem entsprechenden optischen Element (2) zugeordnet sind.

3. **Vorrichtung zur Beleuchtung und/oder Signalgebung nach** Anspruch 1 oder 2, **dadurch gekennzeichnet, dass** mindestens eine Lichtquelle (11) vom Typ einer Leuchtdiode an der Basis zumindest eines Teils der optischen Elemente (2) angeordnet ist.

4. **Vorrichtung zur Beleuchtung und/oder Signalgebung nach** Anspruch 3, **dadurch gekennzeichnet, dass** jede Lichtquelle (11) in einer Ausnehmung in der Basis des optischen Elements (2) angeordnet ist.

5. **Vorrichtung zur Beleuchtung und/oder Signalgebung nach einem** der Ansprüche 1 bis 4, **dadurch gekennzeichnet, dass** zumindest ein Teil der Träger (4) der optischen Elemente (2) unabhängig voneinander beweglich ist.

6. Vorrichtung zur Beleuchtung und/oder Signalgebung nach einem der Ansprüche 1 bis 5, **dadurch gekennzeichnet, dass** die **Betätigungsmittel (5, 6) aus einem Servomotor (5) bestehen, der ein lineares oder drehendes Betätigungsgerät (6) steuert, wobei die Bewegungsübertragungs-Mittel mehrere Schwingarme (7, 8,** 9) aufweisen, von denen mindestens einer (7) das Betätigungsgerät (6) mit einem beweglichen Träger (4) verbindet.

7. Vorrichtung zur Beleuchtung und/oder Signalgebung nach Anspruch 6, **dadurch gekennzeichnet, dass** sie mindestens zwei Reihen mehrerer beweglicher optischer Elemente (2) aufweist, wobei die beiden Träger (4) jedes Paars an benachbarten beweglichen optischen Elementen (2) einer Reihe durch einen Übertragungsschwingarm (9) verbunden sind, wobei ein Träger (4) jeder Reihe über einen Steuerungsschwingarm (8) mit einem Träger (4) einer benachbarten Reihe verbunden ist.

8. **Vorrichtung zur Beleuchtung und/oder Signalgebung nach** Anspruch 7, **dadurch gekennzeichnet, dass** die Verbindungspunkte der Schwingarme (8, 9) in bestimmten Abständen in Bezug auf die jeweiligen Drehachsen der Träger (4) angeordnet sind, um für eine bestimmte Drehamplitude jedes der optischen Elemente (2) um eine Referenzposition herum zu sorgen.

9. Vorrichtung zur Beleuchtung und/oder Signalgebung nach einem der Ansprüche 1 bis 8, **dadurch gekennzeichnet, dass** die Schwingarme (8, 9) zur Einstellung der relativen Winkelpositionen der optischen Elemente (2) eine verstellbare Länge besitzen.

10. Fahrzeug, **dadurch gekennzeichnet, dass** es mit mindestens einer Vorrichtung zur Beleuchtung und/oder Signalgebung nach einem der vorhergehenden Ansprüche versehen ist und **dadurch**, dass es elektronische Mittel (12) zum Steuern der Betätigungsmittel (5, 6) aufweist, um die Ausrichtung und/oder die Form des oder der Lichtbündel in Abhängigkeit von Betriebsparametern des Fahrzeugs wie Geschwindigkeit, Amplitude und Frequenz des Radeinschlags sowie Frequenz der Schaltvorgänge zu verändern.
